# FASCICULE DE BREVET EUROPEEN

(11) **EP 2 360 030 B1**
(45) Date de publication et mention de la délivrance du brevet: **16.04.2014**
(21) Numéro de dépôt: 11290077.4
(22) Date de dépôt: 09.02.2011
(51) Int. Cl.: B60B 29/00, B66C 1/24, B66C 1/12

(54) **Dispositif de manutention d'une roue de véhicule et procédé de manutention de roue mettant en oevre un tel dispositif**
Vorrichtung zur Wartung eines Fahrzeugrads, und Reifenwartungsverfahren, bei dem eine solche Vorrichtung zu Einsatz kommt
Device for handling a vehicle wheel and wheel-handling method implementing such a device

(30) Priorité: 23.02.2010 FR 1000736
(43) Date de publication de la demande: 24.08.2011
(73) Titulaire: NEXTER Systems, 42328 Roanne (FR)
(72) Inventeur: Laurent, Henri, 18023 Bourges (FR); Valette, Guillaume, 18023 Bourges (FR)
(74) Mandataire: Célanie, Christian

(56) Documents cités:
- WO-A2-96/12639
- CN-Y- 2 181 491
- DE-A1- 4 000 915
- GB-A- 766 477
- US-A- 3 937 343
- US-A1- 2009 047 108

## Description

Le domaine technique de l'invention est celui des dispositifs ou outillages de manutention des roues de véhicules ainsi que des procédés de montage de telles roues.

Sur les chaînes d'assemblage des véhicules automobiles, ou dans les ateliers de réparation, le montage des roues se fait lorsque le véhicule est sur chandelles ou sur un convoyeur.

La manipulation de la roue doit se faire en mettant la roue à hauteur pour la centrer sur le moyeu. Bien souvent les roues sont stockées à plat couchées sur un flanc ce qui ajoute à l'opération de mise à hauteur une opération de relevage de la roue. Or suivant les catégories de véhicules les roues peuvent être très lourdes rendant les manipulations délicates voire physiques ou dangereuses pour les opérateurs.

Pour assister les opérateurs de montage dans ces manipulations de roues, il est connu dans CN2181491 d'avoir recours à un dispositif à câbles et mâchoires métalliques dans lequel la roue repose sur une structure horizontale comportant deux mâchoires pinçant le pneu dans sa partie basse sur ses deux flancs. Des câbles passant de part et d'autre de la roue servent à élinguer l'ensemble et à maintenir la roue verticale en passant sur le haut de la roue.

Ce dispositif présente l'inconvénient d'être relativement complexe en terme de nombre et de nature de pièces. En outre ce dispositif impose d'avoir accès aux deux côtés de la roue pour permettre le positionnement des mâchoires et le passage des câbles. Il est ainsi nécessaire de disposer de plusieurs opérateurs si la roue est lourde pour faire dans un premier temps un relevage manuel de la roue quand elle est stockée à plat et pour dans un second temps maintenir la roue verticale pendant l'installation du dispositif.

Le document US 3937343 A décrit un procédé de manutention d'une roue.

La présente invention a pour objet un dispositif de manutention de structure simple et facile à mettre en place sur une roue, même lorsqu'elle est horizontale. Ce dispositif permet de limiter les efforts physiques et le nombre d'opérateurs pour la manutention de la roue jusqu'à son montage sur le moyeu.

L'invention a également pour objet un procédé de manutention de roue mettant en oeuvre un tel dispositif.

Ainsi l'invention a pour objet un procédé de manutention d'une roue de masse importante à partir d'une position de stockage, en particulier pour permettre son montage sur un moyeu d'un véhicule, procédé de manutention caractérisé en ce qu'il comprend les étapes suivantes:
- on positionne sur la roue un dispositif de manutention comprenant au moins deux liens souples non élastiques parallèles l'un à l'autre et liés par au moins deux moyens d'attache souples et non élastiques, les liens et attaches permettant d'entourer sur sensiblement 360° la bande de roulement d'un pneumatique monté sur la roue, un lien se trouvant ainsi positionné au niveau de chaque flanc latéral de la roue,
- on rapproche les extrémités des différents liens souples de façon à emprisonner la roue dans le dispositif de manutention,
- on accroche les extrémités des différents liens souples du dispositif de manutention à un dispositif de levage et manutention, tel un treuil solidaire d'un pont roulant, ce dernier assurant le levage et le déplacement de la roue.

Selon une caractéristique du procédé, pour une roue en position de stockage sensiblement verticale, la roue est positionnée sur le dispositif de manutention par roulage jusqu'à ce quelle soit centrée sur la longueur et la largeur du dispositif de manutention.

Selon une autre caractéristique du procédé, les deux liens sont solidaires l'un de l'autre par leurs extrémités et forment ainsi une boucle unique fermée, et on solidarise les extrémités des différents liens en faisant passer une première extrémité de la boucle dans une seconde extrémité de la boucle à la manière d'un noeud coulant. La première extrémité de la boucle peut alors être accrochée au dispositif de levage.

L'invention, à également pour objet un dispositif de manutention d'une roue de véhicule munie d'un pneumatique et permettant la mise en oeuvre du procédé cité avant, en particulier pour permettre la fixation de la roue sur un moyeu d'un véhicule. Le dispositif de manutention comporte au moins deux liens souples non élastiques disposés parallèlement l'un à l'autre et ayant une longueur sensiblement égale et qui est supérieure au périmètre de la roue, les liens étant liés l'un à l'autre par au moins deux moyens d'attache souples et non élastiques, répartis le long des liens, les moyens d'attache ayant par ailleurs une longueur telle qu'ils laissent une distance entre les liens souples qui est supérieure à la largeur du pneumatique et inférieure à la largeur du pneumatique augmentée de celle des flancs latéraux de ce dernier, permettant ainsi de positionner un lien au niveau de chaque flanc latéral du pneumatique

Selon un mode de réalisation du dispositif, les deux liens sont solidaires l'un de l'autre par leurs extrémités et forment ainsi une boucle unique fermée.

Dan ce cas, avantageusement, les liens souples ont une longueur telle qu'il est possible d'introduire une extrémité de la boucle dans l'autre extrémité après mise en place du dispositif sur une roue.

Selon un mode de réalisation du dispositif, les moyens d'attache souples sont également répartis sur le pourtour de la roue et sont au nombre de 6.

Selon un autre mode de réalisation, le dispositif comporte au moins deux moyens d'attache distants l'un de l'autre d'environ 2πR/3 et équidistants des extrémités du dispositif (R étant le rayon de la roue).

Selon un mode particulier de réalisation du dispositif, les liens souples non élastiques comportent des chaînes.

L'invention sera mieux comprise à la lecture de la description de modes particuliers de réalisation du dispositif ainsi que de différentes étapes du procédé, description faite en référence aux dessins fournis en annexe et dans lesquels :
- la figure la représente une étape de positionnement du dispositif de manutention autour de la roue dans le cas d'une roue posée à l'horizontale,
- la figure 1b représente l'étape de positionnement du dispositif de manutention autour de la roue dans le cas d'une roue posée à la verticale,
- la figure 2 représente une étape de fermeture du dispositif de manutention sur la roue,
- la figure 3 représente une étape de levage de la roue à l'aide du dispositif de manutention,
- la figure 4 représente une étape de positionnement de la roue équipée du dispositif de manutention sur le moyeu d'un véhicule monté sur chandelles,
- la figure 5 représente un premier mode de réalisation d'un dispositif de manutention selon l'invention,
- la figure 6 représente un deuxième mode de réalisation du dispositif de manutention selon l'invention, et
- la figure 7 représente un troisième mode de réalisation du dispositif de manutention selon l'invention.

L'invention se propose de résoudre les problèmes de manipulation en atelier, de roues lourdes ayant une masse de l'ordre 150 kg en ne nécessitant qu'un opérateur pour la mise en oeuvre d'un procédé au cours duquel on enveloppe la roue avec un dispositif spécifique.

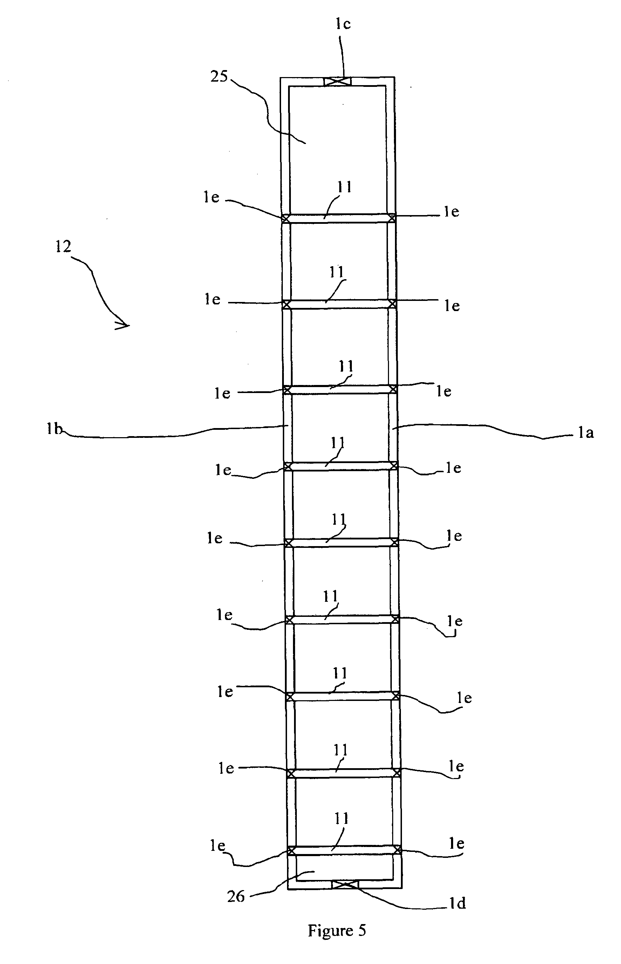

Selon la figure 5 et selon un mode de réalisation, le dispositif 1 comporte deux premiers liens textiles (sangles) non élastiques 1a et 1b parallèles entre eux. Ces deux liens 1a et 1b sont solidarisés l'un à l'autre par leurs extrémités respectives au moyen, par exemple, de coutures 1c et 1d. Le dispositif comporte des seconds liens textiles non élastiques, aussi nommés moyens d'attache 11 parallèles entre eux et solidaires par leurs extrémités des premiers liens textiles 1a et 1b au moyen de coutures 1e par exemple. On notera qu'à chaque extrémité du dispositif 1, les boucles 25 et 26 formées par les liens souples 1a et 1b et le moyen d'attache 11 adjacent peuvent avoir des tailles notablement différentes. Les moyens d'attache 11 sont répartis de manière égale sur le pourtour de la roue. Plus le nombre de moyens d'attache 11 est élevé plus le maintien de la roue 2 sera efficace et la mise en place aisée. Un nombre optimal de moyens se situant entre 5 et 9 moyens répartis sur le pourtour de la roue.

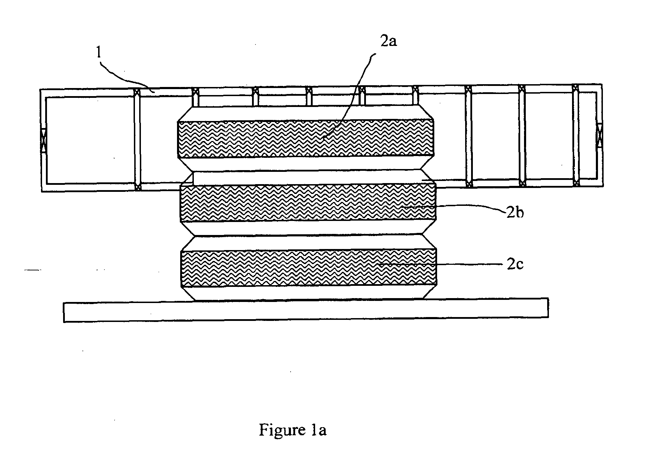

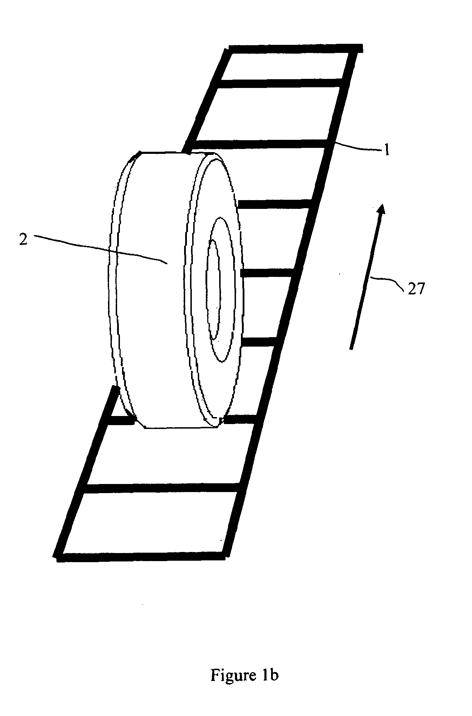

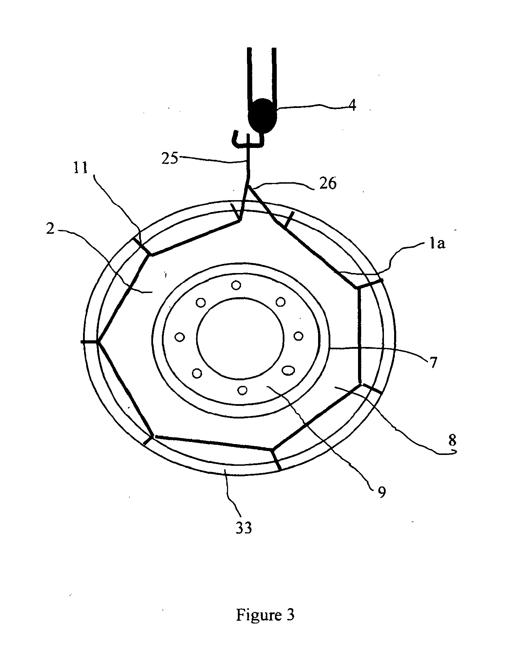

Selon les figures 1a et 1b on notera que le dispositif 1 est plus large que la roue 2 afin que cette dernière soit bien maintenue au niveau de ses flancs, tel qu'illustré par la figure 3.

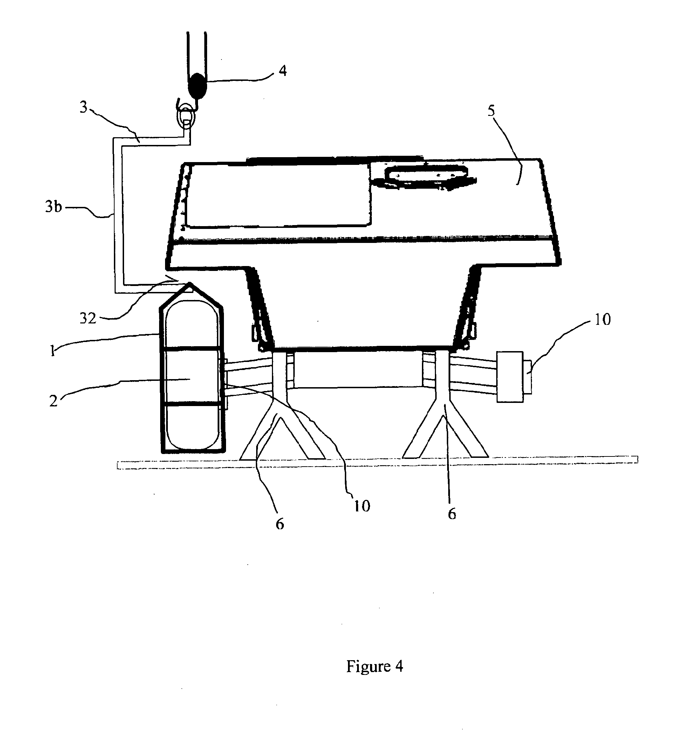

Selon la figure 3 on notera qu'une fois le dispositif 1 enroulé autour de la roue 2, la longueur des moyens d'attache 11 est telle que chaque lien 1a et 1b est situé uniquement sur un des flancs 7 du pneu 8 et ne va pas empiéter sur la jante 9 ce qui risquerait de gêner le montage de la roue 2 sur un moyeu 10 (figure 4). Chaque lien 1a et 1b est donc appliqué sur un flanc différent du pneu 8. Ainsi ce dernier est maintenu de chaque côté par un lien 1a, 1b différent et il n'y a pas de risque de voir la roue sortir hors du dispositif 1, ce qui serait le cas si un des liens était sur la bande de roulement du pneu. Toujours selon la figure 3 on notera que l'écartement entre les moyens d'attache 11 est bien inférieur au diamètre de la roue 2 ceci afin que la roue ne passe pas entre les mailles formées par l'arrangement des liens 1 et des moyens d'attache 11.

Selon la figure 1a et selon un premier mode opératoire, une pile de roues 2a, 2b et 2c posées horizontalement est mise à la disposition de l'opérateur de montage, le dispositif de manutention 1 est positionné de manière à tangenter la roue 2a placée sur le dessus de la pile de roues. Le dispositif 1 dépasse dans les mêmes proportions la largueur de la roue 2a d'un coté comme de l'autre de celle ci. Ce premier mode opératoire peut être appliqué à une roue unique directement placée au sol (configuration non représentée). On remarque qu'il est possible avec le dispositif selon l'invention de positionner chaque lien 1a, 1b sensiblement en regard d'un flanc du pneu et ainsi de fixer le dispositif à la roue sans qu'il soit nécessaire de la soulever. En effet le dispositif 1 permet d'atteindre les flancs de la roue 2 sans avoir à la soulever.

Selon la figure 1b et selon un second mode opératoire, la roue 2 est verticale et le dispositif de manutention 1 est déroulé au sol. Pour amener la roue 2 dans la configuration représentée sur la figure 1b, l'opérateur doit faire rouler la roue 2 sur le dispositif 1 dans le sens 27 longitudinal du dispositif 1 et jusqu'au centre de celui ci.

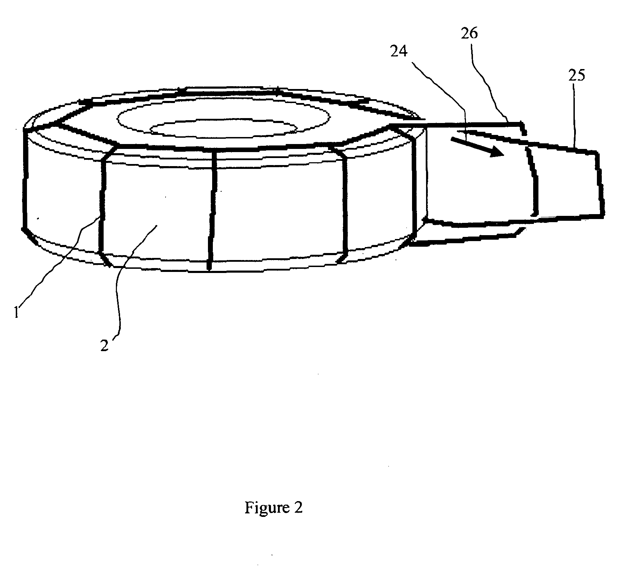

La figure 2 montre comment rendre le dispositif solidaire de la roue une fois qu'il est positionné sur cette dernière. Le dispositif 1 est ainsi enroulé autour de la roue 2. Pour cela les deux extrémités 25 et 26 sont rapprochées l'une de l'autre de manière à encercler la roue 2.

Selon un mode opératoire, en suivant le sens 24, une première extrémité 25 formant une boucle du dispositif 1 est passée dans la boucle formée par une seconde extrémité 26 du dispositif 1. Dans le cas où les boucles n'ont pas la même taille, c'est la plus grande qui est introduite dans la plus petite.

Selon un autre mode opératoire non représenté, les deux extrémités 25 et 26 pourront simplement être mises bords à bords et maintenues ainsi par la mise en place d'un crochet de hissage.

Selon la figure 3, la roue est emprisonnée sur tout son périmètre par le dispositif 1. Un crochet 4 de hissage d'un pont de manutention (pont non représenté) est accroché à la première extrémité 25 du dispositif. Selon le mode opératoire mentionné précédemment (non représenté), les deux extrémités 25 et 26 seront mises bord à bord et seront accrochées ensemble au crochet 4. Une fois l'accrochage réalisé, l'ensemble formé par la roue 2 dans le dispositif 1 est hissé et déplacé.

Selon la figure 4 et selon un mode opératoire, la roue 2 est contenue dans le dispositif de manutention de roue 1. Le dispositif 1 est accroché à un "C" de manutention 3 lui-même fixé à un crochet de pont roulant 4. La roue est positionnée sur un moyeu 10 d'un véhicule 5 reposant sur des chandelles 6. Le "C" de manutention est un outillage bien connu en forme de lettre C et comportant un montant latéral 3b décalé par rapport à la ligne reliant le point de fixation 32 de la charge et le point de fixation du crochet 4 de pont roulant. Cet outillage n'est utilisé que pour permettre l'accès aux zones du véhicule 5 placées en déport.

Ci après se trouvent les descriptions de dispositifs réalisés suivant d'autres modes et pouvant être utilisés avec le procédé précédemment décrit.

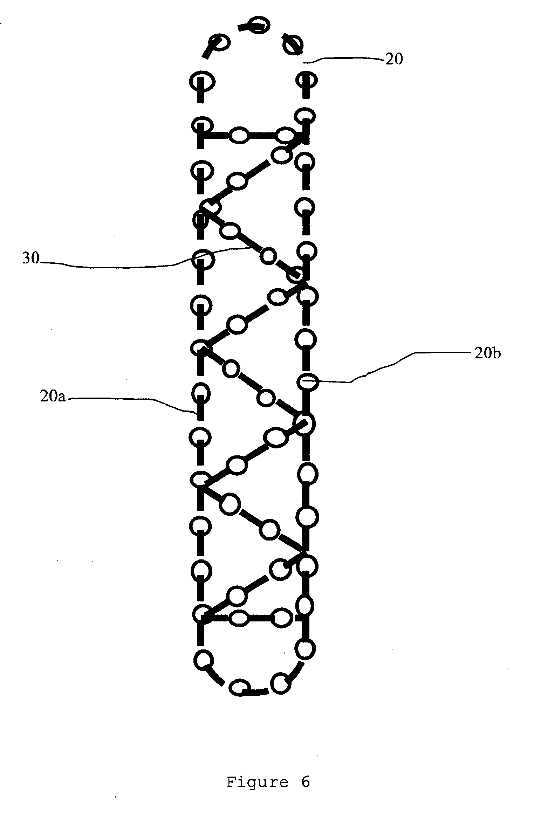

Selon la figure 6 et selon un second mode de réalisation le dispositif est constitué de liens formés par une première chaîne fermée formant une boucle unique 20 disposée de manière à faire une forme oblongue. Le dispositif 1 comporte une seconde chaîne 30 qui relie alternativement les deux cotés les plus longs 20a et 20b de la boucle 20 de manière à former des segments constituant des moyens d'attache reliant les deux cotés 20a et 20b de la boucle 20.

La longueur de chaque segment (moyen d'attache) de la seconde chaîne 30 est choisie de manière à ce que les cotés les plus longs 20a et 20b de la boucle 20 soient parallèles entre eux et espacés d'une distance supérieure à la largeur de la roue 2 et inférieure à la largeur du pneumatique 33 augmentée de celle des flancs latéraux 8. Les deux chaînes 20 et 30 sont rendues solidaires au niveau de chaque intersection de la boucle 20 et de la seconde chaîne 30 au moyen de maillons rapides ou par le passage de la seconde chaîne 30 dans les maillons de la boucle 20. Dans ce dernier cas la taille des maillons de la seconde chaîne 30 devra être suffisamment petite pour passer dans les maillons de la boucle 20.

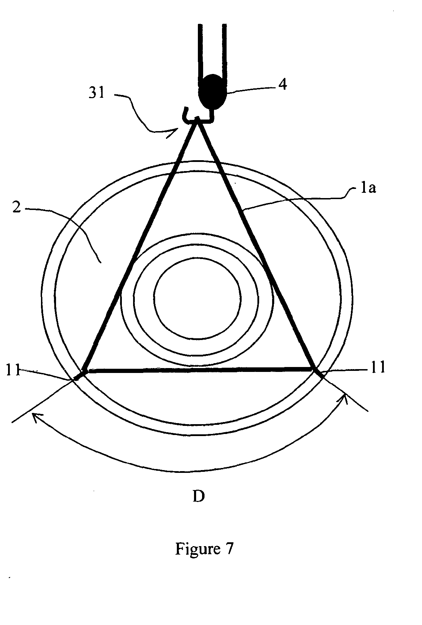

La figure 7 montre un autre mode de réalisation dans lequel le dispositif 1 comporte seulement deux moyens d'attache 11 séparés d'une distance D équivalente à environ un tiers du périmètre (2πR) de la roue 2 afin que la roue 2 (de rayon R) ne passe pas entre les moyens d'attache 11 ni qu'elle puisse rouler en dehors du dispositif 1. On notera aussi que les moyens d'attache 11 sont également placés à la même distance du point d'attache 31 du dispositif 1 avec le crochet 4 pour assurer la stabilité pendulaire de l'ensemble. Les liens souples 1a et 1b (1b non représenté) assurent le maintien latéral de la roue 2.

## Revendications

1. Procédé de manutention d'une roue(2) de masse importante à partir d'une position de stockage, en particulier pour permettre son montage sur un moyeu (10) d'un véhicule (5), **caractérisé en ce qu'**il comprend les étapes suivantes :
- on positionne sur la roue (2) un dispositif de manutention (1) comprenant au moins deux liens souples (1a, 1b) non élastiques parallèles l'un à l'autre et liés par au moins deux moyens d'attache (11) souples et non élastiques, les liens (1a, 1b) et attaches(11) permettant d'entourer sur sensiblement 360° la bande de roulement (2a) d'un pneumatique (33) monté sur la roue (2), un lien se trouvant ainsi positionné au niveau de chaque flanc (8) latéral de la roue (2),
- on rapproche les extrémités (25, 26) des différents liens souples (1a, 1b) de façon à emprisonner la roue (2) dans le dispositif de manutention (1),
- on accroche les extrémités (25, 26) des différents liens souples (1a, 1b) du dispositif (1) de manutention à un dispositif de levage (4) et manutention, tel un treuil solidaire d'un pont roulant, ce dernier assurant le levage et le déplacement de la roue (2).

2. Procédé de manutention selon la revendication 1, **caractérisée en ce que**, pour une roue (2) en position de stockage sensiblement verticale, la roue (2) est positionnée sur le dispositif (1) de manutention par roulage jusqu'à ce quelle soit centrée sur la longueur et la largeur du dispositif (1) de manutention.

3. Procédé de manutention selon la revendication 1, **caractérisée en ce que**, les deux liens (1a, 1b) étant solidaires l'un de l'autre par leurs extrémités et formant ainsi une boucle unique fermée, on solidarise les extrémités (25, 26) des différents liens (1a, 1b) en faisant passer une première extrémité (25) de la boucle dans une seconde extrémité (26) de la boucle, la première extrémité (25) de la boucle pouvant alors être accrochée au dispositif (1) de levage.

4. Dispositif de manutention d'une roue (2) de véhicule munie d'un pneumatique (33) et permettant la mise en oeuvre du procédé selon les revendications précédentes, en particulier pour permettre la fixation de la roue (2) sur un moyeu (10) d'un véhicule (5), **caractérisé en ce qu'**il comporte au moins deux liens souples (1a, 1b) non élastiques disposés parallèlement l'un à l'autre et ayant une longueur sensiblement égale et qui est supérieure au périmètre de la roue (2), les liens (1a, 1b) étant liés l'un à l'autre par au moins deux moyens d'attache (11) souples et non élastiques, répartis le long des liens (1a, 1b), les moyens d'attache (11) ayant par ailleurs une longueur telle qu'ils laissent une distance entre les liens souples (1a, 1b) qui est supérieure à la largeur du pneumatique (33) et inférieure à la largeur du pneumatique (33) augmentée de celle des flancs (8) latéraux de ce dernier, permettant ainsi de positionner un lien au niveau de chaque flanc (8) latéral du pneumatique (33).

5. Dispositif de manutention selon la revendication 4, **caractérisé en ce que** les deux liens (1a, 1b) sont solidaires l'un de l'autre par leurs extrémités (25, 26) et forment ainsi une boucle unique fermée.

6. Dispositif de manutention selon la revendication 5, **caractérisé en ce que** les liens souples (1a, 1b) ont une longueur telle qu'il est possible d'introduire une extrémité (25) de la boucle dans l'autre extrémité (26) après mise en place du dispositif (1) sur une roue (2).

7. Dispositif de manutention selon une des revendications 4 à 6, **caractérisé en ce que** les moyens d'attache (11) souples sont également répartis sur le pourtour de la roue (2) et sont au nombre de 6.

8. Dispositif de manutention selon une des revendications 4 à 6, **caractérisé en ce qu'**il comporte au moins deux moyens d'attache distants l'un de l'autre d'environ 2πR/3 et équidistants des extrémités (25, 26) du dispositif.

9. Dispositif de manutention selon une des revendications 4 à 8, **caractérisé en ce que** les liens souples (1a, 1b) non élastiques comportent des chaînes.

## Patentansprüche

1. Verfahren zur Handhabung eines Rades (2) mit sehr großer Masse ausgehend von einer Lagerposition, insbesondere um dessen Montage auf eine Nabe (10) eines Fahrzeuges (5) zu ermöglichen, **dadurch gekennzeichnet, dass** es die folgenden Schritte umfasst:
- Positionieren einer Handhabungseinrichtung (1) auf dem Rad (2), welche wenigstens zwei biegsame, nicht elastische Bänder (1a, 1b), die parallel zueinander verlaufen und mit wenigstens zwei biegsamen und nicht elastischen Befestigungsmitteln (11) verbunden sind, umfasst, wobei die Bänder (1a, 1b) und die Befestigungen (11) es ermöglichen, die Reifenlauffläche (2a) eines auf dem Rad (2) montierten Reifens (33) um im Wesentlichen 360° zu umwickeln, wobei sich ein Band so jeweils im Bereich jeder seitlichen Flanke (8) des Rades (2) befindet,
- Zusammenführen der Enden (25, 26) der verschiedenen biegsamen Bänder (1a, 1b) derartig, dass das Rad in der Handhabungsvorrichtung (1) festgesetzt wird,
- Anhängen der Enden (25, 26) der verschiedenen biegsamen Bänder (1a, 1b) der Handhabungsvorrichtung (1) an eine Hebe- und Handhabungseinrichtung (4), wie eine mit einer fahrbaren Brücke fest verbundenen Winde, wobei diese Letztere das Anheben und das Verfahren des Rades (2) gewährleistet.

2. Handhabungsverfahren nach Anspruch 1, **dadurch gekennzeichnet, dass** für ein Rad (2) in im Wesentlichen senkrechter Lagerposition das Rad (2) auf der Handhabungsvorrichtung (1) durch Rollen positioniert wird, bis es über die Länge und Breite der Handhabungsvorrichtung (1) zentriert ist.

3. Handhabungsverfahren nach Anspruch 1, **dadurch gekennzeichnet, dass** die beiden Bänder (1a, 1b) über ihre Enden fest miteinander verbunden sind und so eine einzige, geschlossene Schleife bilden, und dass die Enden (25, 26) der verschiedenen Bänder (1a, 1b) verbunden werden, indem ein erstes Ende (25) der Schleife durch ein zweites Ende (26) der Schleife durchgeführt wird, wobei das erste Ende (25) der Schleife nun an die Hebeeinrichtung (4) angehängt werden kann.

4. Vorrichtung zur Handhabung eines Fahrzeugrades (2), welches mit einem Reifen (33) versehen ist, und welche die Durchführung des Verfahrens nach den vorhergehenden Ansprüchen ermöglicht, insbesondere um die Befestigung des Rades (2) an einer Nabe (10) eines Fahrzeugs (5) zu ermöglichen, **dadurch gekennzeichnet, dass** sie wenigstens zwei biegsame, nicht elastische Bänder (1a, 1b) umfasst, die parallel zueinander angeordnet sind und eine im Wesentlichen gleiche Länge besitzen, welche größer als der Umfang des Rades (2) ist, wobei die Bänder (1a, 1b) über wenigstens zwei biegsame und nicht elastische Befestigungsmittel (11) miteinander verbunden sind, welche entlang der Bänder (1a, 1b) verteilt sind, wobei die Befestigungsmittel (11) außerdem eine derartige Länge besitzen, dass sie einen Abstand zwischen den biegsamen Bändern (1a, 1b) lassen, welcher größer als die Breite des Reifens (33) und kleiner als die Breite des Reifens (33) ist, welche um die Breite der seitlichen Flanken (8) dieses Letzteren erhöht ist, wobei dadurch ermöglicht wird, ein Band im Bereich jeder seitlichen Flanke (8) des Reifens (33) zu positionieren.

5. Handhabungsvorrichtung nach Anspruch 4, **dadurch gekennzeichnet, dass** die beiden Bänder (1a, 1b) über ihre Enden (25, 26) fest miteinander verbunden sind und so eine einzige, geschlossene Schleife bilden.

6. Handhabungsvorrichtung nach Anspruch 5, **dadurch gekennzeichnet, dass** die biegsamen Bänder (1a, 1b) eine derartige Länge aufweisen, dass es möglich ist, ein Ende (25) der Schleife in das andere Ende (26) einzuführen, nachdem die Vorrichtung (1) auf einem Rad (2) angeordnet wurde.

7. Handhabungsvorrichtung nach einem der Ansprüche 4 bis 6, **dadurch gekennzeichnet, dass** die biegsamen Befestigungsmittel (11) gleichmäßig über den Umfang des Rades (2) verteilt sind und 6 an der Zahl sind.

8. Handhabungsvorrichtung nach einem der Ansprüche 4 bis 6, **dadurch gekennzeichnet, dass** sie wenigstens zwei Befestigungsmittel umfasst, die in etwa 2πR/3 voneinander entfernt und im gleichen Abstand zu den Enden (25, 26) der Vorrichtung angeordnet sind.

9. Handhabungsvorrichtung nach einem der Ansprüche 4 bis 8, **dadurch gekennzeichnet, dass** die biegsamen, nicht elastischen Bänder (1a, 1b) Ketten umfassen.

## Claims

1. A handling process for a wheel (2) of large mass from a storage position, in particular to enable its mounting onto the hub (10) of a vehicle (5), handling process wherein it comprises the following steps:
- a handling device (1) that comprises at least two flexible non-elastic attachments (1a, 1b) parallel to one another and linked by at least two flexible and non-elastic fastening means (11) is positioned on the wheel (2), the attachments (1a, 1b) and fastening means (11) enable the tyre tread (2a) mounted on a wheel (2) to be encircled over substantially 360°, an attachment thus being position at each side flank (8) of the wheel (2),
- the ends (25, 26) of the different flexible attachments (1a, 1b) are brought together so as to imprison the wheel (2) within the handling device (1),
- the ends (25, 26) of the different flexible attachments (1a, 1b) of the handling device (1) are hooked onto a handling and lifting device (4), such as a winch integral with a bridge crane, the latter ensuring the lifting and displacement of the wheel (2).

2. A handling process according to Claim 1, wherein for a wheel (2) in a substantially vertical storage position, the wheel (2) is positioned on the handling device (1) by being rolled until it is centred on the length and the width of the handling device (1).

3. A handling process according to Claim 1, wherein the two attachments (1a, 1b) are integral with one another by their ends and thus form a single closed loop, and the ends (25, 26) of the different attachments (1a, 1b) are joined together by passing a first end (25) of the loop and in a second end (26) of the loop, the first end (25) of the loop may then be hooked to the lifting device (4).

4. A handling device for the wheel (2) of a vehicle equipped with a tyre (33) and implementing the process according to the above Claims, in particular to enable the wheel (2) to be attached to the hub (10) of a vehicle (5), wherein it incorporates at least two flexible non-elastic attachments (1a, 1b) arranged in parallel to one another and of a substantially equal length that is greater than that of the wheel's (2) perimeter, the attachments (1a, 1b) being linked to one another by at least two flexible non-elastic fastening means (11), spaced along the attachments (1a, 1b), the fastening means (11) being, furthermore, of a length such that they leave a distance between the flexible attachments (1a, 1b) that is greater than the width of the tyre (33) and less than the width of the tyre added to the side flank (8) of the latter, thereby enabling an attachment to be positioned on each side flank (8) of the tyre (33).

5. A handling device according to Claim 4, wherein the two attachments (1a, 1b) are integral with one another by their ends (25, 26) and thus form a single closed loop.

6. A handling device according to Claim 5, wherein the flexible attachments (1a, 1b) are of a length such that it is possible to introduce one end (25) of the loop into the other end (26) after the device (1) has been installed on a wheel (2).

7. A. handling device according to one of Claims 4 to 6, wherein the flexible fastening means (11) are also spaced around the periphery (2) of the wheel (2) and are six in number.

8. A handling device according to one Claims 4 to 6, wherein it incorporates at least two fastening means at a distance from one another of around 2nR/3 and at an equal distance from the ends (25, 26) of the device.

9. A handling device according to one of Claims 4 to 8, wherein the flexible non-elastic attachments (1a, 1b) incorporate chains.
